(19) Europäisches Patentamt
European Patent Office
Office européen des brevets

(11) **EP 2 143 772 B1**

(12) **EUROPÄISCHE PATENTSCHRIFT**

(45) Veröffentlichungstag und Bekanntmachung des Hinweises auf die Patenterteilung:
**16.03.2016 Patentblatt 2016/11**

(51) Int Cl.:
*C09J 7/02* (2006.01)      *C08F 8/00* (2006.01)
*C08L 53/02* (2006.01)      *C09J 153/02* (2006.01)
*C08K 5/00* (2006.01)

(21) Anmeldenummer: **09164269.4**

(22) Anmeldetag: **01.07.2009**

(54) **Verwendung einer Klebfolie mit einer einseitig mit einer Klebmasse ausgerüsteten Trägerfolie zur Abdeckung von Mikrotiterplatten**

Use of an adhesive film with a carrier film with an adhesive mass on one side for covering microtitre boards

Utilisation d'un film adhésif doté d'un film de support équipé d'une masse adhésive sur un côté pour le recouvrement de plaques de microtitration

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.07.2008 DE 102008032568**

(43) Veröffentlichungstag der Anmeldung:
**13.01.2010 Patentblatt 2010/02**

(73) Patentinhaber: **tesa SE
22848 Norderstedt (DE)**

(72) Erfinder:
• **Krawinkel, Thorsten, Dr.
22457, Hamburg (DE)**
• **Ring, Christian
21435, Stelle (DE)**
• **Kampers, Maren
21217, Seevetal (DE)**

(56) Entgegenhaltungen:
**WO-A-2005/063913      DE-A1- 19 852 946**

EP 2 143 772 B1

**Beschreibung**

Die vorliegende Erfindung betrifft die Verwendung einer Klebfolie mit einer einseitig mit einer Klebmasse ausgerüsteten Trägerfolie zur Abdeckung von Mikrotiterplatten.

Mikrotiterplatten werden vielfach eingesetzt in bioanalytischen Prozessen für eine multiple, schnelle Analyse mit geringem Probenvolumen. Typischerweise bestehen diese Mikrotiterplatten aus einer Kunststoffplatte, die mehrere, voneinander isolierte Vertiefungen in Reihen und Spalten enthält, die als Reaktionsgefäße dienen. Es gibt Platten mit 96 Vertiefungen, mit jeweils einem Volumen von ca. 0,2 bis 0,4 ml, aber auch solche mit deutlich mehr und dafür kleineren Vertiefungen.

Für die Lagerung und Reifung der unterschiedlichen biologischen Prozesse müssen diese einzelnen Vertiefungen abgeschlossen werden, damit keine Flüssigkeit verloren gehen kann, aber auch kein Austausch zwischen den einzelnen Vertiefungen stattfinden kann.

Zu diesem Zweck werden einseitig klebende Klebfolien eingesetzt.

Diese Klebfolien müssen eine ausreichende Klebkraft besitzen, um ausreichend gut zu haften, andererseits müssen die Folien auch möglichst wenig wasserdampfdurchlässig sein, um während der Reifezeit kein Wasser zu verlieren. Zudem sollten die Klebfolien nach der Anwendung wieder ohne Masserückstände entfernbar sein und möglichst transparent sein, um auch optische Analysemethoden zu erlauben.

Zudem sollten die Klebmassen auf den Klebfolien eine gewisse Wärmestandfähigkeit besitzen, da ansonsten während der Reifungsprozesse bei hohen Temperaturen von fast 100 °C leicht Falten in der Folie entstehen, die dazu führen können, dass einige der Vertiefungen, besonders die in den Ecken, offen sind.

Bei einer geringen Anfassklebrigkeit der Klebfolien ist es einfacher, diese insbesondere mit Latexhandschuhen, wie sie üblicherweise in den bioanalytischen Labors getragen werden, zu verarbeiten.

Ein neues Verfahren für eine Anwendung der Mikrotiterplatten ist die PCR (PCR= Polymerase-Kettenreaktion). Die PCR gilt als eine revolutionäre Methode in der Biochemie und ist sehr vielfältig einsetzbar, so zum Beispiel zum Nachweis von Krankheiten und zur Entwicklung von Medikamenten (Wirkstoffnachweis, Nachweis von Nebenreaktionen).

Bei der weiterentwickelten Real-Time PCR wird die Reaktion während der Vervielfältigung mittels Fluoreszenz-Marker verfolgt.

An eine Real Time-PCR Analysen-Verschlussfolie werden zusätzliche Anforderungen gestellt, neben der Dichtigkeit der Reaktionskammern, eine hohe Transmission und ein geringer Schrumpf der Folie, das heißt eine geringe Faltenbildung während des Temperaturzyklus.

Es sind unterschiedliche Klebmasse für Klebefolien, die in den genannten Anwendungen zum Einsatz kommen, beschrieben, besonders vorteilhaft haben sich Klebmassen auf der Basis von bestimmten Silikonen gezeigt.

US 6,703,120 beschreibt solche Klebmassen auf Silikonbasis für diese Anwendung. Diese Klebemassen haben den Vorteil, eine gute Verarbeitbarkeit wegen der sehr geringen Anfassklebrigkeit zu gewährleisten. Zudem besitzen sie eine hohe Verklebungsfestigkeit, so dass der Flüssigkeitsverlust durch Verdunstung nach 2 Wochen Lagerung nur bei ca. 1 % liegt.

Nachteilig sind insbesondere der hohe Preis, der für Silikonklebmassen gezahlt werden muss, und die Schwierigkeit, einen geeigneten Schutzliner zu finden, da nur Trennfolien oder Papiere mit Fluorsilikon eine ausreichende Trennwirkung ermöglichen.

Klebmassen mit Acrylaten zeigen üblicherweise eine zu hohe Durchlässigkeit für Wasserdampf, so dass die Verluste an Wasser zu hoch sind.

Aufgabe der vorliegenden Erfindung ist es, eine Klebefolie mit einer Klebemasse zur Verfügung zu stellen, die ihrerseits zur Versiegelung von Reaktionsgefäßen, insbesondere Mikrotiterplatten hervorragend geeignet ist und die die Nachteile der bekannten Klebemassen beziehungsweise -folien nicht oder nicht in so großem Umfang aufweist.

Gelöst wird diese Aufgabe erfindungsgemäß durch die Verwendung einer Klebefolie, wie sie im Hauptanspruch niedergelegt ist. Gegenstand der Unteransprüche sind dabei vorteilhafte Ausgestaltungen und Weiterbildungen der Klebefolie.

Demgemäß betrifft die Erfindung die Verwendung einer Klebfolie mit einer einseitig mit einer Klebmasse ausgerüsteten Trägerfolie zur Abdeckung von Mikrotiterplatten, wobei die Klebmasse gebildet ist aus zumindest einem säure- oder säureanhydridmodifizierten Vinylaromatenblockcopolymer, zumindest einem Klebharz und zumindest einem Metallchelat.

Klebmassen auf Basis von säuremodifizierten Vinylaromatenblockcopolymeren, die über Metallchelate vernetzt werden, besitzen eine deutlich reduzierte Anfassklebrigkeit gegenüber typischerweise eingesetzten Klebmassen auf der Basis von Vinylaromatenblockcopolymeren. Trotzdem ist die Verklebungsfestigkeit immer noch hoch genug, um auch bei diesen Massesystemen in der Verwendung in einer Klebefolie, die zur Mikrotiterabdeckung eingesetzt wird, eine Verdunstungsrate von unter 1 % zu erreichen.

Außerdem lassen sich diese Klebmassen hervorragend wieder ablösen, ohne Klebmasserückstände auf den Mikrotiterplatten zu hinterlassen. Auch beim Durchstechen mit einer Spritze bleiben an dieser keine Klebmassereste hängen.

Durch eine geeignete Wahl der zugesetzten Klebharze sind auch Klebmassen möglich, die transparent und farblos sind, so dass eine optische Analyse der Proben beziehungsweise eine Fluoreszenzmessung nicht gestört werden.

Die Klebmassen sind auch resistent gegenüber bestimmten in der Analytik eingesetzten Chemikalien, besonders gegenüber polaren Lösungsmitteln wie DMSO (Dimethylsulfoxid).

Überraschenderweise zeigte sich somit, dass der Einsatz von den erfindungsgemäßen Klebmassen zu Klebfolien führte, die sehr gut für eine Mikrotiterabdeckung geeignet sind, insbesondere auch für den Einsatz in der PCR

Im Gegensatz zu den Silikonkautschukmassen können darüber hinaus die Klebmassen auf der Basis von Vinylaromatenblockcopolymeren mit einem normalen silikonisierten Trennmedium wie einem Papier oder einer Folie abgedeckt werden, ein fluorsilikonisierter Liner ist nicht notwendig.

Eine Vernetzung von maleinsäureanhydridmodifizierten Blockcopolymeren mit Chelaten ist bekannt aus der EP 1 311 559 A2, bei der eine Steigerung der Kohäsion der Blockcopolymermischungen beschrieben wird.

Als Klebmassen finden bevorzugt solche auf Basis von Blockcopolymeren enthaltend Polymerblöcke überwiegend gebildet von Vinylaromaten (A-Blöcke), bevorzugt Styrol, und solchen überwiegend gebildet durch Polymerisation von 1,3-Dienen (B-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche B-Blöcke enthalten. Vorzugsweise sind die Blockcopolymere teilweise, selektiv oder vollständig hydriert. Blockcopolymere können eine lineare A-B-A-Struktur aufweisen. Einsetzbar sind ebenfalls Blockcopolymere von radialer Gestalt sowie sternförmige und lineare Multiblockcopolymere. Als weitere Komponenten können A-B-Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Zumindest ein Teil der eingesetzten Blockcopolymere muss dabei säure- oder säureanhydridmodifiziert sein, wobei die Modifizierung hauptsächlich durch radikalische Pfropfcopolymerisation von ungesättigten Mono- und Polycarbonsäuren oder -säureanhydriden wie zum Beispiel Fumarsäure, Itaconsäure, Citraconsäure, Acrylsäure, Maleinsäureanhydrid, Itaconsäureanhydrid oder Citraconsäureanhydrid, bevorzugt Maleinsäureanhydrid erfolgt. Bevorzugt liegt der Anteil an Säure beziehungsweise Säureanhydrid zwischen 0,5 und 4 Gew.-% bezogen auf das gesamte Blockcopolymer.

Kommerziell sind solche Blockcopolymere zum Beispiel unter dem Namen Kraton FG 1901 und Kraton FG 1924 der Firma Kraton beziehungsweise Tuftec M 1913 und Tuftec M 1943 der Firma Asahi erhältlich.

Die Haftklebemasse hat vorzugsweise einen Anteil von 20 bis 70 Gew.-% von Vinylaromatenblockcopolymer, vorzugsweise 30 bis 60 Gew.-%, und besonders bevorzugt 35 bis 55 Gew.-%, .-%, jeweils bezogen auf die gesamte Klebmasse, wobei nicht der gesamte Anteil an Blockcopolymeren anhydrid- beziehungsweise säuremodifiziert vorliegen muss.

Neben den schon genannten säure- oder säureanhydridmodifizierten Vinylaromatenblockcopolymeren können auch noch weitere Säuren oder Säureanhydride zugesetzt werden, um einen höheren Vernetzungsgrad und damit eine noch weiter verbesserte Kohäsion zu erreichen. Dabei sind sowohl monomere Säureanhydride und Säuren, wie sie in US 3,970,608 A1 beschrieben sind, als auch säure- oder säureanhydridmodifizierte Polymere als auch säureanhydridenthaltende Copolymere wie Polyvinylmethylether-maleinsäureanhydrid-Copolymere, zum Beispiel zu beziehen unter dem Namen Gantrez, vertrieben von der Firma ISP, einsetzbar.

Als Klebrigmacher nutzen erfindungsgemäße Klebmassen als Hauptkomponente insbesondere Klebharze, die mit dem Elastomerblock der Vinylaromatenblockcopolymere verträglich sind.

Bevorzugt geeignet sind unter anderem nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von $C_5$-, $C_5/C_9$- oder $C_9$-Monomerströmen, Polyterpenharze auf Basis von $\alpha$-Pinen und/oder $\beta$-Pinen und/oder $\delta$-Limonen, hydrierte Polymerisate von bevorzugt reinen $C_8$- und $C_9$-Aromaten. Vorgenannte Klebharze können sowohl allein als auch im Gemisch eingesetzt werden.

Für den Einsatz in der PCR werden insbesondere solche Harze eingesetzt, die besonders farblos sind, idealerweise hydrierte Kohlenwasserstoffharze auf Basis von $C_5$-, $C_5/C_9$- oder $C_9$.

Als weitere Additive können typischerweise genutzt werden:

- primäre Antioxidantien wie zum Beispiel sterisch gehinderte Phenole
- sekundäre Antioxidantien wie zum Beispiel Phosphite oder Thioether
- Prozessstabilisatoren wie zum Beispiel C-Radikalfänger
- Lichtschutzmittel wie zum Beispiel UV-Absorber oder sterisch gehinderte Amine
- Verarbeitungshilfsmittel
- Endblockverstärkerharze
- Füllstoffe wie zum Beispiel Siliziumdioxid, Glas (gemahlen oder in Form von Kugeln), Aluminiumoxide, Zinkoxide, Calciumcarbonate, Titandioxide, Ruße, etc. ebenso wie Farbpigmente und Farbstoffe sowie optische Aufheller

- gegebenenfalls weitere Polymere von bevorzugt elastomerer Natur; entsprechend nutzbare Elastomere beinhalten unter anderem solche auf Basis reiner Kohlenwasserstoffe, zum Beispiel ungesättigte Polydiene wie natürliches oder synthetisch erzeugtes Polyisopren oder Polybutadien, chemisch im Wesentlichen gesättigte Elastomere wie zum Beispiel gesättigte Ethylen-Propylen-Copolymere, $\alpha$-Olefincopolymere, Polyisobutylen, Butylkautschuk, Ethylen-Propylenkautschuk sowie chemisch funktionalisierte Kohlenwasserstoffe wie zum Beispiel halogenhaltige, acrylathaltige oder vinyletherhaltige Polyolefine, um nur einige wenige zu nennen
- Plastifizierungsmittel wie zum Beispiel Flüssigharze, Weichmacheröle oder niedermolekulare flüssige Polymere wie zum Beispiel niedermolekulare Polybutene mit Molmassen < 1500 g/mol (Zahlenmittel)

Die Haftklebrigkeit der Haftklebemasse kann optional erst durch thermische Aktivierung oder durch Lösemittelaktivierung erzeugt werden.

Die Metalle der Metallchelate können die der 2. 3. 4. und 5. Hauptgruppe und die Übergangsmetalle sein. Besonders geeignet sind zum Beispiel Aluminium, Zinn, Titan, Zirkonium, Hafnium, Vanadium, Niob, Chrom, Mangan, Eisen, Kobalt, und Cer. Besonders bevorzugt sind Aluminium und Titan.

Die Metallchelate können gemäß einer vorteilhaften Ausführungsform der Erfindung durch die folgende Formel wiedergegeben werden:

$$(R_1O)n\ M\ (XR_2Y)m,$$

wobei

M ein Metall wie oben beschrieben ist;
$R_1$ eine Alkyl- oder Arylgruppe wie Methyl, Ethyl, Butyl, Isopropyl oder Benzyl ist;
n null oder eine größere ganze Zahl ist;
X und Y Sauerstoff oder Stickstoff sind, die jeweils auch durch eine Doppelbindung an $R_2$ gebunden sein können;
$R_2$ eine X und Y verbindende Alkylengruppe ist, die verzweigt sein und/oder auch Sauerstoff oder weitere Heteroatome in der Kette enthalten kann;
m eine ganze Zahl, mindestens jedoch 1 ist.

Bevorzugte Chelatliganden sind solche, die aus der Reaktion folgender Verbindungen entstanden sind: Triethanolamin, 2,4-Pentandion, 2-Ethyl-1,3-Hexandiol oder Milchsäure Besonders bevorzugte Vernetzer sind Aluminium- und Titanacetylacetonate.

Dabei sollte ein annähernd äquivalentes Verhältnis zwischen den Säurebeziehungsweise Säureanhydridgruppen und den Acetylacetonatgruppen gewählt werden, um eine optimale Vernetzung zu erreichen, wobei sich ein kleiner Überschuss an Vernetzer als positiv herausgestellt hat.
Das Verhältnis zwischen Anhydridgruppen und Acetylacetonatgruppen kann aber variiert werden, dabei sollte für eine ausreichende Vernetzung keine der beiden Gruppen in mehr als einem fünffachen molaren Überschuss vorliegen.

Die erfindungsgemäßen Klebmassen zeigen eine besonders gute Haftung zu Polypropylen und Polystyrol, die Materialien, aus denen üblicherweise die Mikrotiterplatten hergestellt werden.

Durch die Vernetzung mit den Metallchelaten erweichen die Blockcopolymermassen nicht schon bei relativ moderaten Temperaturen, sondern überstehen auch unverändert die üblichen Prozesse, die mit den Mikrotiterplatten durchgeführt werden, wie Erhitzen auf 90 °C und Lagern bei -40 °C, ohne dass es zu einer starken Faltenbildung der Folien kommt.

Der Träger der Klebfolie besteht typischerweise abhängig von der Anforderung an Reißkraft und Transparenz aus Polypropylen oder Polyethylenterephthalat. Aber auch Anwendungen mit einer Aluminiumfolie als Träger oder einer aluminiumbeschichteten Folie sind denkbar.

Vorzugsweise sind sowohl Klebemasse als auch Trägerfolie transparent, und zwar dergestalt, dass die transparente Klebefolie vorzugsweise eine Transmission von größer 60 % aufweist, insbesondere eine Transmission größer 90 % bei einer Wellenlänge von 350 bis 1150 nm.

Mit dem Transmissionsgrad - bisweilen auch nur kurz als Transmission bezeichnet -, der in der Regel in % angegeben wird, ist das Verhältnis der auf der Rückseite eines mit Licht durchstrahlten Körpers ankommenden Lichtleistung zu der auf der Vorderseite eintreffenden Lichtleistung gemeint. Die Transmission wird beschnitten durch Reflektion und Absorption.

Es gilt also: Transmissionsgrad = (1 - Reflektionsgrad) x (1 – Absorptionsgrad).

Im Folgenden wird die Erfindung anhand von Beispielen näher erklärt, ohne damit die Erfindung in irgendeiner Form beschränken zu wollen.

Beispiele

Die Herstellung und Verarbeitung der Haftklebemassen kann sowohl aus der Lösung, als auch aus der Schmelze erfolgen. Besonders bevorzugt ist jedoch die Fertigung der Haftklebemassen aus der Lösung, um eine zu frühe Vernetzung zu verhindern.

Herstellung der Muster:

Die Bestandteile werden in einer Mischung aus Toluol/Benzin/Isopropanol 40:40:20 gelöst, so dass ein Feststoffgehalt von 40 Gew.-% entsteht. Kurz vor der Beschichtung wird dann das Metallchelat, gelöst 10 Gew.-% in Toluol, zugegeben und durch Rühren homogen verteilt. Die Muster werden dann auf einer 23 $\mu$m dicken PET-Folie so ausgestrichen und bei 110 °C getrocknet, dass ein Flächengewicht von 50 g/cm Klebmasse verbleibt.

Zusammensetzung der Beispiele siehe Tabelle 1.

Tabelle 1 :

| | 1 | 2 | 3 | C4 |
|---|---|---|---|---|
| Kraton FG 1901 | 100 | 40 | 40 | |
| Kraton FG 1924 | | 60 | 60 | |
| Kraton G 1652 | | | | 100 |
| Regalite R 1100 | 100 | 100 | | 100 |
| Escorez 5600 | | | 120 | |
| Shellflex 371 | 20 | 20 | | 20 |
| Kristalex 1140 | | 10 | | |
| Aluminium-acetylacetonat | 1 | 1 | 1 | |

Angaben jeweils in Gewichtsanteilen

Eigenschaften der eingesetzten Rohstoffe:

Kraton FG 1901     SEBS (Styrol-Ethylen/Butylen-Styrol-Blockcopolymer), 100% Dreiblock, Blockpolystyrolgehalt: 30 Gew.-%, mit ca. 2 Gew.-% Maleinsäureanhydrid modifiziert, Kraton Polymers

Kraton FG 1924     SEBS (Styrol-Ethylen/Butylen-Styrol-Blockcopolymer), ca. 41 Gew.-% Zweiblock, Blockpolystyrolgehalt: 13 Gew.-%, mit ca. 1,3 Gew.-% Maleinsäureanhydrid modifiziert Kraton Polymers

Kraton G 1652     SEBS (Styrol-Ethylen/Butylen-Styrol-Blockcopolymer), 100% Dreiblock, Blockpolystyrolgehalt: 30 Gew.-%, ohne Säuremodifizierung, Kraton Polymers

Regalite R1100     hydriertes $C_9$-Harz mit einem Erweichungspunkt von ca. 100 °C, Eastman Chemicals

Eastotac 100 W     hydriertes $C_5$-Harz mit einem Erweichungspunkt von ca. 100 °C, Eastman Chemicals

Shellflex 371     naphthenisches Öl, Shell

Kristalex 1140     reines Aromatenharz als Endblockverstärker mit einem Erweichungspunkt von ca. 140 °C, Eastman

Klebkraftmessung

Die Prüfung der Schälfestigkeit (Klebkraft) erfolgte gemäß PSTC-1.

Ein 2 cm breiter Streifen eines wie oben beschrieben hergestellten Musters wurde auf eine Stahlplatte beziehungsweise Polystyrolplatte durch dreimaliges doppeltes Überrollen mittels einer 2 kg Rolle verklebt. Die Platte wurde eingespannt und der Haftklebestreifen über sein freies Ende an einer Zugprüfmaschine unter einem Schälwinkel von 180° mit einer Geschwindigkeit von 300 mm/min abgezogen.

Flüssigkeitsverluste

Alle 96 Vertiefungen einer Mikrotiterplatte wurden mit jeweils 50 μl einer farbigen wässrigen Lösung gefüllt. Die Oberfläche der Platte wurde trocken gerieben mit einem fusselfreien Tuch, um anhaftende Flüssigkeitstropfen zu entfernen.

Die Platte wurde dann mit der erfindungsgemäßen Klebfolie verschlossen, indem dies mittig auf die Platte aufgebracht wurde und mit einem hierfür üblichen Applikator rundum gut angedrückt wurde. Das Gewicht der Platte wurde auf der Analysenwaage bestimmt.

Es wurde ein Temperaturprogramm gefahren von

1: 94 °C 2 min
2: 94 °C 15s
3: 50 °C 15s
4: 72 °C 30s
5: 72 °C 2 min

wobei die Schritte 2 bis 4 30 mal wiederholt wurden.
Anschließend wurde auf 22 °C temperiert. Nach einer visuellen Kontrolle, ob alle Vertiefungen noch gefüllt waren, wurden die Muster nach 24h erneut gewogen.
Die Verdunstung wurde daraufhin in Prozent ausgerechnet.

Abziehen nach Lagerung

Die verklebten Muster aus dem vorherigen Test wurden nach Abkühlen auf Raumtemperatur von Hand langsam abgezogen. Dabei wurde auf Masserückstände auf der Mikrotiterplatte geachtet.

Resistenz gegenüber DMSO

Statt der farbigen wässrigen Lösung wurde eine Lösung von 5 Gew.-% DMSO in Wasser eingesetzt, wobei die Mikrotiterplatten häufiger über Kopf gehalten wurden, um eine Benetzung des Klebebandes mit der DMSO-Lösung zu bewirken.
Untersucht wurde, ob sich die Klebebänder veränderten, zum Beispiel aufquollen.

Transparenz

Es wurde die Transparenz der fertigen Produkte nach ASTM-D 1003-61, Methode A gemessen.

Bei den beispielhaften Klebfolien wurden die folgenden klebtechnischen Daten ermittelt:

| Haftklebemasse Beispiel Nr. | Klebkraft Stahl sofort in N/cm | Klebkraft Polystyrol sofort in N/cm | Abziehen nach 90 °C Lagerung für 1 Woche | Flüssigkeitsverluste nach Lagerung in Gew.-% | Resistenz gegenüber DMSO |
|---|---|---|---|---|---|
| 1 | 3,6 | 2,7 | Keine Rückstände | 1,5 | o.k. |
| 2 | 5,2 | 4,7 | Keine Rückstände | 1,2 | o.k. |
| 3 | 4,1 | 3,6 | Keine Rückstände | 0,9 | o.k. |
| C4 | 3,9 | 2,5 | Massefäden Rückstände | 5,3 Einige Reaktionsgefäße offen | o.k. |

Wie zu erkennen ist, gibt es bei den Mustern mit vernetzten Vinylaromatenblockcopolymeren keine Rückstände auf der Mikrotiterplatte. Obwohl hier die Verklebungsfestigkeiten recht niedrig sind, kommt es nicht zum Ablösen der Klebfolien, was an den geringen Verdunstungswerten sichtbar wird. Ohne vernetzte Systeme (Beispiel C4) kommt es zu starker Faltenbildung und dadurch zum Öffnen einiger Reaktionsgefäße, was an der hohen Verdunstungsrate zu sehen ist.

**Patentansprüche**

1. Verwendung einer Klebfolie mit einer einseitig mit einer Klebmasse ausgerüsteten Trägerfolie zur Abdeckung von Mikrotiterplatten, wobei die Klebemasse gebildet ist aus zumindest einem säure- oder säureanhydridmodifizierten Vinylaromatenblockcopolymer, zumindest einem Klebharz und zumindest einem Metallchelat.

2. Verwendung nach Anspruch 1,
   **dadurch gekennzeichnet, dass**
   das Metallchelat mit folgender Formel wiedergegeben werden kann:

   $$(R_1O)_n \, M \, (XR_2Y)_m,$$

   wobei

   M ein Metall der 2. 3. 4. oder 5. Hauptgruppe oder ein Übergangsmetall ist;
   $R_1$ eine Alkyl- oder Arylgruppe wie Methyl, Ethyl, Butyl, Isopropyl oder Benzyl ist;
   n null oder eine größere ganze Zahl ist,
   X und Y Sauerstoff oder Stickstoff sind, die jeweils auch durch eine Doppelbindung an $R_2$ gebunden sein können;
   $R_2$ eine X und Y verbindende Alkylengruppe ist, die verzweigt sein und/oder auch Sauerstoff oder weitere Heteroatome in der Kette enthalten kann;
   m eine ganze Zahl, mindestens jedoch 1 ist.

3. Verwendung nach Anspruch 1 oder 2,
   **dadurch gekennzeichnet, dass**
   es sich bei den Metallchelaten um Aluminium- oder Titanacetylacetonate handelt.

4. Verwendung nach zumindest einem der Ansprüche 1 bis 3,
   **dadurch gekennzeichnet, dass**
   die Klebemasse einen Anteil von 20 bis 70 Gew.-%, vorzugsweise von 30 bis 60 Gew.-%, weiter vorzugsweise von 35 bis 55 Gew.-% Vinylaromatenblockcopolymer bezogen auf die gesamte Klebmasse enthält, wobei nicht der gesamte Anteil an Blockcopolymeren anhydrid- beziehungsweise säuremodifiziert vorliegen muss.

5. Verwendung nach zumindest einem der vorhergehenden Ansprüche,
   **dadurch gekennzeichnet, dass**
   es sich bei den Vinylaromatenblockcopolymeren um Styrolblockcopolymere handelt.

6. Verwendung nach zumindest einem der vorhergehenden Ansprüche,
   **dadurch gekennzeichnet, dass**
   der Anteil an Säure beziehungsweise Säureanhydrid zwischen 0,5 und 4 Gew.-% bezogen auf das gesamte Blockcopolymer liegt.

7. Verwendung nach zumindest einem der vorhergehenden Ansprüche,
   **dadurch gekennzeichnet, dass**
   die Klebmasse weitere Elastomere und/oder weitere Säuren oder Säureanhydride enthält.

8. Verwendung nach zumindest einem der vorhergehenden Ansprüche,
   **dadurch gekennzeichnet, dass**
   die Blockcopolymere zumindest teilweise hydriert sind.

9. Verwendung nach zumindest einem der vorhergehenden Ansprüche,
   **dadurch gekennzeichnet, dass**
   als Klebharze hydrierte Kohlenwasserstoffharze auf Basis von $C_5$-, $C_5/C_9$- oder $C_9$ eingesetzt werden.

10. Verwendung nach zumindest einem der vorhergehenden Ansprüche,
    **dadurch gekennzeichnet, dass**
    die Trägerfolie eine Polypropylen-, eine Polyethylenterephthalat- oder eine Aluminiumfolie oder eine aluminiumbeschichtete Folie ist.

**Claims**

1. Use of an adhesive sheet having a carrier film provided with an adhesive on one side for covering microtitre plates, the adhesive being formed from at least one acid-or acid anhydride-modified vinylaromatic block copolymer, at least one tackifier resin and at least one metal chelate.

2. Use according to Claim 1,
   **characterized in that**
   the metal chelate can be represented by the following formula:

   $$(R_1O)_n \, M \, (XR_2\text{-}Y)_m,$$

   where

   M is a metal from main group 2, 3, 4 or 5 or a transition metal;
   $R_1$ is an alkyl or aryl group such as methyl, ethyl, butyl, isopropyl or benzyl;
   n is zero or a greater whole number,
   X and Y are oxygen or nitrogen, which in each case may also be attached through a double bond to $R_2$;
   $R_2$ is an alkylene group which connects X and Y and which may be branched and/or may also contain oxygen or further heteroatoms in the chain;
   m is an integer, but is at least 1.

3. Use according to Claim 1 or 2,
   **characterized in that**
   the metal chelates are aluminium acetylacetonates or titanium acetylacetonates.

4. Use according to at least one of Claims 1 to 3,
   **characterized in that**
   the adhesive comprises a fraction of 20% to 70%, preferably of 30% to 60%, more preferably of 35% to 55% by weight of vinylaromatic block copolymer based on the overall adhesive, it not being necessary for the total fraction of block copolymers to be in anhydride-modified and/or acid-modified form.

5. Use according to at least one of the preceding claims,
   **characterized in that**
   the vinylaromatic block copolymers comprise styrene block copolymers.

6. Use according to at least one of the preceding claims,
   **characterized in that**
   the fraction of acid and/or acid anhydride is between 0.5% and 4% by weight, based on the overall block copolymer.

7. Use according to at least one of the preceding claims,
   **characterized in that**
   the adhesive comprises further elastomers and/or further acids or acid anhydrides.

8. Use according to at least one of the preceding claims,
   **characterized in that**
   the block copolymers are at least partly hydrogenated.

9. Use according to at least one of the preceding claims,
   **characterized in that**
   tackifier resins used are hydrogenated hydrocarbon resins based on Cs, $C_5/C_9$ or $C_9$.

10. Use according to at least one of the preceding claims,
    **characterized in that**
    the carrier film is a polypropylene film, a polyethylene terephthalate film or an aluminium foil or is an aluminium-coated film.

**Revendications**

1. Utilisation d'un film adhésif doté d'un film support équipé d'une masse adhésive sur un côté pour le recouvrement de plaques de microtitration, la masse adhésive étant formée par au moins un copolymère séquencé de composé aromatique de vinyle modifié par un acide ou un anhydride d'acide, au moins une résine adhésive et au moins un chélate métallique.

2. Utilisation selon la revendication 1, **caractérisée en ce que** le chélate métallique peut être représenté par la formule suivante :

$$(R_1O)_n M(XR_2Y)_m$$

dans laquelle

M est un métal du groupe principal 2, 3, 4 ou 5 ou un métal de transition ;
$R_1$ est un groupe alkyle ou aryle tel que méthyle, éthyle, butyle, isopropyle ou benzyle ;
n représente zéro ou un nombre entier plus élevé,
X et Y représentent l'oxygène ou l'azote, qui peuvent chacun également être reliés à $R_2$ par une double liaison ;
$R_2$ est un groupe alkylène reliant X et Y, qui peut être ramifié et/ou également contenir de l'oxygène ou d'autres hétéroatomes dans la chaîne ;
m représente un nombre entier, au mois toutefois 1.

3. Utilisation selon la revendication 1 ou 2, **caractérisée en ce que** les chélates métalliques sont des acétylacétonates d'aluminium ou de titane.

4. Utilisation selon au moins l'une quelconque des revendications 1 à 3, **caractérisée en ce que** la masse adhésive contient une proportion de 20 à 70 % en poids, de préférence de 30 à 60 % en poids, de manière davantage préférée de 35 à 55 % en poids, de copolymère séquencé de composé aromatique de vinyle par rapport à la masse adhésive totale, la proportion totale des copolymères séquencés ne devant pas être modifiée par un anhydride ou un acide.

5. Utilisation selon au moins l'une quelconque des revendications précédentes, **caractérisée en ce que** les copolymères séquencés de composés aromatiques de vinyle sont des copolymères séquencés de styrène.

6. Utilisation selon au moins l'une quelconque des revendications précédentes, **caractérisée en ce que** la proportion d'acide ou d'anhydride d'acide est comprise entre 0,5 et 4 % en poids, par rapport au copolymère séquencé total.

7. Utilisation selon au moins l'une quelconque des revendications précédentes, **caractérisée en ce que** la masse adhésive contient des élastomères supplémentaires et/ou des acides ou anhydrides d'acides supplémentaires.

8. Utilisation selon au moins l'une quelconque des revendications précédentes, **caractérisée en ce que** les copolymères séquencés sont au moins partiellement hydrogénés.

9. Utilisation selon au moins l'une quelconque des revendications précédentes, **caractérisée en ce que** des résines hydrocarbonées hydrogénées à base de $C_5$, $C_5/C_9$ ou $C_9$ sont utilisées en tant que résines adhésives.

10. Utilisation selon au moins l'une quelconque des revendications précédentes, **caractérisée en ce que** le film support est un film en polypropylène, en polyéthylène téréphtalate ou en aluminium, ou un film revêtu d'aluminium.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6703120 B
- EP 1311559 A2
- US 3970608 A1